# EUROPEAN PATENT APPLICATION

(11) **EP 3 014 985 A1**
(43) Date of publication of application: **04.05.2016**
(21) Application number: 15460101.7
(22) Date of filing: 27.10.2015
(51) Int. Cl.: A01G 31/00

(54) **SUBSTRATE FOR SOILLESS CULTIVATION OF PLANTS**

(30) Priority: 03.11.2014 PL 41004814
(71) Applicant: CARBOHORT Spólka z o.o., 64-200 Wolsztyn (PL); Instytut Odlewnictwa, 96-100 Skierniewice (PL)
(72) Inventor: Pawel, Mietlicki, 62-085 Skoki (PL); Jacek, Dysko, 93-110 Gluchów (PL); Stanislaw, Kaniszewski, 96-300 Zyrardów (PL)
(74) Representative: Golebniak, Andrzej

(57) **Abstract**

The subject of the invention is the substrate for soilless cultivation of plants, which is completely organic, made from natural and environmentally-friendly materials, using brown coal, as well as fully biodegradable and rich in nutrients throughout the period of plant growth, providing stable conditions for air and water, high hydrophility of the substrate, thermal buffer-ability, as well as good transformation of water and gas, and at the same time characterized by a durable and homogenous structure, which is slowly biodegradable, being packed in the form of rectangular bales stretched over with the foil sleeve.

According to the invention, the substrate is natural brown coal fragmented into single fractions of particles with the diameter from 1.0 to 20 mm and/or into the earth fraction, wherein the proportions of air and water of this substrate are controlled by the selection of graining and/or adding the earth fraction.

## Description

The subject of invention is the substrate for soilless cultivation of plants, aimed at soilless cultivation of vegetables - especially tomatoes, cucumbers, peppers and lettuces; fruits - even strawberries and ornamental plants, under covers such as: greenhouses, Plastic tunnels or roofs.

For years, we can observe a growing interest among the producers of fruits, vegetables, mushrooms (champignons and oyster mushrooms) or ornamental plants, as well as the owners of private horticultural farms, in the transition from traditional cultivation on the substrate in the direction of modern soilless cultivation systems, included in hydroponic cultivation. There is often even talk of the domination of horticultural production under covers by soilless cultivation. Widely used are, for example, the mineral substrate (made from rockwool, glass wool, pearlite, zeolite, gravel or sand), and increasingly also substrates made from waste from the textile industry, formed in the production of various textiles - such as waste from wool and cotton. Due to the orientation of modern agriculture on the environmental protection, as well as due to the widespread tendency to eliminate from the used production technologies of materials and resources, which could pose a threat to the natural environment and food safety, a number of modern solutions are implemented, including soilless, biodegradable substrates for cultivation of plants. Known and for decades successfully used in agriculture and horticulture, are organic substrates - such as high peatmoss, bark of broad-leaved trees or conifers, sawdust, wood fiber, coconut fiber (produced from seed coats of coconuts from palms) or straw (preferably hard straw, e.g. represeed, rye, wheat or triticale straw, which have better properties than soft straw - for example oat straw, a serious disadvantage of which is, however, very quickly loose of the structure). Nevertheless, one also uses the woody parts of stems of fibrous plants, such as linen or hemps, broken and separated from the fiber in the processing of linen or hemp straw into the fiber (the so-called linen or hemp harl. There are also known two-, three- or four-component mixtures of different substrates, including the mixture of peat and coconut fiber or hard straw, highly fragmented bark of conifers, sawdust of conifers and peat. Such a soilless cultivation on the organic substrate allows to reduce the impact of unfavorable effects, which were previously faced by the gardeners - such as the problem of deteriorating air and water properties of soil, the issue of decline in soil fertility (soilless cultivations have an advantage over traditional soil cultivations, lacking the restrictions in the field of crop rotation - one can, however, consecutively cultivate any plants, also in the monoculture, since there is no phenomenon of soil fatigue). In addition, soilless cultivation eliminates the problem of increasing soil salinity and accumulation of soil pathogens, which are persistent, stubborn to combat, long overduing in the soil and require increasing funding for disinfection of soil and protection of plants, while significantly affecting the economic viability of the entire cultivation. Soilless cultivation also allows you to control plant growth.

Soilless cultivation is most often performed under various kinds of covers, for example, under roofs, in greenhouses or plastic tunnels, on a specially prepared gutters or racks, which are equipped with containers (generally pots) or plastic bags are optionally filled with a substrate in the form of various lengths of cultivation mats. The optimal medium for root development is the one characterized by the total porosity in the range of 70-90%, and the volume of free spaces is filled with 50% of water and 50% of air. Indeed, it is important for the substrate to retain the consistent air and water properties throughout the cultivation period. Furthermore, the substrate for soilless cultivation should be characterized by the ease of moisturizing and good absorption, which provides the uniform distribution of water throughout the container space or mats, giving favorable conditions for the development of the root system. In addition, the substrate should be free from diseases and pests, easy to dispose and environmentally-friendly.

The main problem faced by the gardeners, is that most of known substrates for soilless cultivation of plants are too quickly losing their structures, thus permeability, sorptivity, and the ability to absorb nutrients and micronutrients.

The patent description of the Polish invention PL 190225 B1 presents the soilless substrate, which can be used in greenhouse horticultural farms. The soilless substrate is straw pressed into boards, stretched over with the foil sleeve with cutouts on one of the sleeve substrate. The preparation methods of the soilless substrate consists in the fact that straw is cut into the chaff of elements with the length of 8 -18 mm, or grinded into elements with the length of 2 - 6 mm, and then pressed into boards with the thickness of 80 - 180 mm. To apply this method, we use the horizontal compress press.

We also know the rockwool mineral substrate for cultivation of plants, discussed in the patent description PLN 190643 B1. This substrate is characterized by a coherent hydrophilic matrix made from mineral rockwool fibers, being mutually connected by means of a binder based on furan resin.

In turn, the Polish patent PL 204941 B1 describes the soilless substrate for cultivation of plants, particularly vegetables. The substrate is characterized by the fact that using four components in the form of coarsely fragmented rye or wheat straw, highly fragmented bark of conifers, sawdust of conifers and peat, one can perform binary, ternary and quatenary mixtures applying matching capabilities, wherein each mixture contains straw. Such a substrate is then concentrated until obtaining the volume density of 0.48-0.66 g/cm3, and packaged in the form of rectangular bales, stretched over with the foil sleeve, which has openings at the top, and both top and end walls of the foil are perforated half the height.

The aim of this invention was to obtain a new, completely biodegradable organic substrate for soilless cultivation of plants, which would provide optimal conditions for plant growth.

According to the invention, the substrate for soilless cultivation of plants constitutes natural brown coal fragmented into a single fraction of particles with the diameter from 1.0 to 20 mm and/or into an earth fraction, wherein the proportions of air and water of the substrate are adjusted by selecting the graining and/or adding the earth fraction. The increase in the fragmentation of brown coal being the substrate, causes the increase in its volume mass and water capacity, while decreasing the air capacity. In this regard, the most favorable air and water properties at pF 1.0, occur in the substrate with the fraction of carbon particles having the diameter of 2.5 mm.

The fragmentation also affects the pH of the substrate, i.e. the greater the fragmentation, the lower the pH. The substrate is packed in the form of rectangular bales being stretched over with the foil sleeve, which top and side walls are welded, equipped with drainage holes and from which open air is extracted.

With the solution according to the invention, one obtained a new, fully organic substrate for soilless cultivation of plants, especially for the cultivation of vegetables in greenhouses and plastic tunnels polytunnel. It provides a favorable solution from the point of view of environmental protection, particularly for solving the problem of the need for substrate utilization af the end of the season of cultivation of plants. In this regard, due to the organic properties of the substrate according to the invention and the content of a significant amount of micronutrients and macronutrients in its structure (e.g. zinc, boron, phosphorus, calcium and potassium), the substrate proved to be an excellent carrier of minerals, which affects the improvement of the entire process of plant growth, and consequently, resulting in higher and quality-better crops, with the enriched mineral content and additional taste. An important advantage of the new substrate is its high hydrophility, guaranteeing equal and stable moisture conditions for the plant across the substrate. The substrate provides earlier yielding and extension of the cultivation period (due to long life and possibilities of proper plant nutrition). In this regard, it was found out that this substrate is free from pathogens, which does not contain harmful substances to plants, but which has bacterial and fungicidal properties, hence reducing the risk of infestation of plants by diseases and soil-related pests.

According to the invention, the substrate for soilless cultivation of plants is mainly characterized by the stability of air and water conditions, thermal buffer-ability and good transformation of water and gas. However, due to highly condensed organic substance, it has a stable, homogeneous and very slowly degradable structure (being degraded at a much slower rate than, for example, time of complete mineralization of wheat straw - amounting to 16 months, or of peat - lasting from 4 to 13 years, depending on the type). According to the invention, the substrate can be used for few, dozen or even several cultivation seasons, without losing the characteristics of its structure, which in turn may lead to the improved economic situation of properties of horticultural farms, at the same time significantly reducing the costs of purchase of new substrates and plant protection products.

According to the invention, the substrate for soilless cultivation of plants meets all the conditions required for soilless cultivation. This unexpected effect was achieved as a result of finding a new application of brown coal. Brown coal has been so far used in agriculture, primarily to improve the properties of light soils, and in horticulture as one of the components of the substrates for land cultivation, or as one of the components of organic fertilizers. Many years of studies on brown coal, which have been initiated even before World War II, and continued by a number of research centers, confirm that brown coal - which is a combustible sedimentary rock, formed by carbonization, created as a result of peat diagenesis at higher temperature and pressure - has a very good physical and chemical properties, so far not fully used in agriculture, and much less appreciated in horticulture. However, it turned out that organic substances contained in brown coal (including humic acids, fulvic acids, hymatometal acids, humins, bitumens, fusit, lignin and cellulose), as well as water and minerals, provide opportunities for their perfect use as the substrate in soilless cultivation of plants. Brown coal, as a rich source of humic substances, which not only affect the fertility of soil, but also the supply of plants in minerals, is the most durable organic material from previously known, used in the field and greenhouse. It decomposes after at least 25 years, has porosity and absorbs water, has a slightly acidic pH of 6-7, and a very low salinity of 0.2 g/dm3 NaCl.

The cultivation substrate in the form of brown coal is further characterized by the fact that the fragmentation of brown coal particles changes its pH, salinity and concentration of S-SO₄, in such a relationship that the higher the fragmentation, the lower the pH, but the increase in the volume substrate of brown coal and the higher the extraction of salts, in particular sulphate salts, and thus the higher the concentration of minerals.

According to the invention, a very favorable advantage of the cultivation substrate is the fact that at the end of the cultivation cycle, it can be still used, preferably used as a single substrate or in a mixture with other substrates, for the production of other plant species, preferably in crops under covers or used for cultivation on green roofs or terraces designated for planting, as well as wherever it is difficult to irrigate, fertilize or provide plant protection products.

The invention is more precisely explained in the following example.

The substrate for soilless cultivation of plants in the form of the cultivation mat is made from brown coal originating from the coalfield in Belchatow, which contains 61.5% of dry matter, 87.5% of organic matter, 12.5% of ash and 43.7% of carbon. It was used in the greenhouse for the cultivation of a fleshy greenhouse tomato Growdena F1. The lumps of brown coal, fragmented on the hammer crusher and sifted on respective sieves, had the following fractions of coal particles: the diameter of 20 mm, the diameter of 10 mm, the diameter of 2.5 mm and the earth fraction. From various fractions and their mixtures (one of the mixtures was the combination of 50% of fraction of 20 mm + 50% of earth fraction, while the second mixture was the combination of 33.3% of fraction of 2.5 mm + 33.3% of fraction of 10 mm + 33.3% of earth fraction), growing mats were made 100 cm length, 20 cm wide and 7 cm high, packed with a double-layer black and white film.

Tomato seeds were sown in mid-February and cultivated in a cycle extended to mid-November, whereas 3 plants were cultivated in all types of mats, in suspended cultivation gutters, in the greenhouse equipped with a three-ring heating system, computer control system of microclimate conditions and fertilizer dispenser. All treatments were performed under covers, in accordance with the principles of integrated tomato cultivation. It was observed that the greater the fragmentation, the lower the pH. The fraction of brown coal with the diameter of 20 mm was characterized by the higher pH of 5.8, while the earth fraction had more acidic pH of 5.0. Greater fragmentation resulted in the increase in the active surface of coal and greater extraction of salts, in particular sulphate salts. The greatest concentration of available minerals occurred in the substrate made from the earth fraction of brown coal, and the smallest concentration occurred in the fraction of coal with the diameter of 20 mm. Coal fragmentation had no effect on the availability of nitrogen (N) - varied from 1.0 to 2.3 mg/dm³, potassium (K) - varied from 9.0 to 12 mg/dm³, phosphorus (P) - varied from 9.0 to 14 mg/dm³, magnesium (Mg) - varied from 69 to 76 mg/dm³ and calcium (Ca) - varied from 1430 to 1550 mg/dm³. The content of these components in substrates made from brown coal was at similar level. It was found that the substrate made from brown coal was characterized by an average of 5.5 times the volume mass in comparison with mineral wool, which had been used so far in this greenhouse for soilless cultivation of tomatoes. Whereby, the greatest volume mass had the substrate made from the finest fractions of brown coal, the so-called earth fraction. The greater the fraction of carbon, the lower the volume density. The mixture of various fractions of coal slightly reduced the volume density, as compared to the earth fraction. Thus - the volume density of the substrate made from fractions having diameters of 20 mm, 10 mm and 2.5 mm, was slightly more than 300 kg/m³, while in the case of the substrate made from the earth fraction, it was slightly more than 400 kg/m³ (during the previous cultivation using cultivation mats made from rockwool, the volume density was recorded at just over 50 kg/m³).

Fragmentation of brown coal improved the air properties of substrates. The fraction of brown coal having the particle diameter of 2.5 mm retained most of the water, compared to the fraction with the diameter of 20 mm. Mixing greater fractions of coal with the earth fraction increased their content of easily available water. Substrates with the carbon particle diameter from 20 mm to 2.5 mm had a greater air capacity as compared to other substrates made from brown coil, as well as in relation to the previously used rockwool.

The study also included testing of the correctness of the pH of the root zone of tomato cultivation, which is closely related with the proper uptake of nutrients. The nuterient solution or tomato fertigation should have the pH from 5.3 to 6.0. Throughout the cultivation period, it was found that the pH of substrates made from brown coal averaged to 6.0 and was similar to the pH of previously used substrates, i.e. made from rockwool (average pH of 6.4). Brown coal did not result in the alkanization of the fertilizer within the rhizosphere, which is often found in the tomato cultivation on different organic substrates, and constitutes a very negative phenomenon, hence the increase in the pH of the root zone causes disruptions in the uptake of some nutrients, especially phosphorus and micronutrients (one stated the alkalization of the nutrient solution for tomato fertigation within the root zone, during the cultivation of tomatoes on substrates, such as: coconut mats, cereal straw, sawdust or wood fiber).

Electrical conductivity (EC) is a basic physical indicator, which determines the concentration of all minerals included in the solution. The nutrient solution provided to the plants throughout the cultivation period, has a stable EC, which ranged from 2.2 to 3.3 mS/cm⁻¹. A higher concentration of nutrients occurred on all applicable substrates made from brown coal, and was similar to the EC value used in the previous cultivation of mineral wood. The increase in the concentration of nutrients in substrates was associated with a greater water transpiration by plants during the summer months, in good conditions of light and temperature, as well as a selective uptake of ions.

The content of N-NO₃ in the zone of the root system located in cultivation mats made from brown coal ranged from 200 to 675 mg/dm³, similarly to mineral wool. The substrate made from brown coal showed no biological sorption of nitrogen, which occurs in the initial period of cultivation on all the previously known organic substrates.

The substrate made from brown coal had a significant impact on the yield of greenhouse tomato GrowdenaF₁. The highest yield was achieved when cultivating the tomato on the cultivation mat with fragmented brown coal having the grain diameter of 2.5 mm, while the lowest one when cultivating the tomato on the earth fraction of brown coal. However, on all mats, irrespective of the grain diameter of brown coal used, one obtained fruits of a very good quality, exceeding the quality of tomatoes cultivated on mineral wool and on other, previously used organic substrates - especially well-filled, hard, containing more dry matter, protein, simple sugars, fiber and magnesium, and characterized by good internal and external staining.

According to the invention, the above example does not exhaust the possibilities of use of the substrate for soilless cultivation of plants. With equal success and positive effects, it can be used again at the end of the cultivation cycle, as a single substrate, or in a admixture with other substrates, for the production of other plant species, for example: vegetable seedings, potted ornamental plants or for the nursery production of ornamental plants. After a single cycle of cultivation, it is recommended to continuously cultivate the same plant species, though the physical properties of the substrate do not change according to the invention, hence there is a fear of transferring the pathogens within the same plant species, which is why it is recommended to change the plant species being cultivated.

Furthermore, the substrate after the process of cultivation can be used in agriculture - for example, it can be sprinkled on the field, ploughed, thus enriching the soil with the organic substance.

## Claims

1. The substrate for soilless cultivation of plants, **characterized in that** it is formed by natural brown coal fragmented into single fractions of particles with the diameter from 1.0 to 20 mm and/or the earth fraction, wherein the proportions of air and water of the substrate are adjusted by the selection of graining and/or adding the earth fraction.

2. The substrate according to the claim 1, **characterized in that** the increase in the fragmentation of brown coal forming this substrate results in the increase in its volume mass and water capacity, while reducing the air capacity.

3. The substrate according to the claim 1, **characterized in that** the increase in the fragmentation of brown coal forming this substrate, causes the decrease in the pH of the substrate.

4. The substrate according to the claims 1 or 2 or 3, **characterized in that** brown coal is most preferably fragmented into the fraction of particles with the diameter of 2.5 mm.

5. The substrate according to the claim 1, **characterized in that** it is being packed in the form of rectangular bales stretched over with the foil sleeve, which top and side walls are welded, equipped with drainage holes, and from which open air is extracted.
